# EUROPÄISCHE PATENTANMELDUNG

(11) **EP 3 404 082 A1**
(43) Veröffentlichungstag der Anmeldung: **21.11.2018**
(21) Anmeldenummer: 17171913.1
(22) Anmeldetag: 19.05.2017
(51) Int. Cl.: C10L 1/02, C11C 1/02, C11C 1/04

(54) **VERFAHREN ZUR VERRINGERUNG DES GEHALTS AN MONOGLYCERIDEN (MG), INSBESONDERE AN GESÄTTIGTEN MONOGLYCERIDEN (GMG), IN EINEM ROH-BIODIESEL**

(71) Anmelder: GEA Mechanical Equipment GmbH, 59302 Oelde (DE)
(72) Erfinder: CAMPOS, Abel Fernandes, 33330 Gütersloh (DE)
(74) Vertreter: Specht, Peter

(57) **Zusammenfassung**

Ein Verfahren zur Verringerung des Gehalts an Monoglyceriden (MG), insbesondere an gesättigten Monoglyceriden (GMG), in einem Roh-Biodiesel (RB), welcher einen Gehalt an Monoglyceriden (MG) zwischen 0,4 bis 0,7 Gew.-% und einen Gehalt an Freien Fettsäuren (FFA) von weniger oder gleich 0,25 Gew.-% aufweist, wobei:
A Bereitstellen des Roh-Biodiesels (RB) mit den vorgenannten Inhaltsstoffen in den vorgenannten Konzentrationen;
B Zugabe (1) einer alkalisch-wässrigen Lösung (L) zum Roh-Biodiesel (RB)
C Durchmischen der alkalisch-wässrigen Lösung (L) unter Hydrolysierung von Glyceriden im Biodiesel, vorzugsweise von Monoglyceriden (MG), insbesondere von gesättigten Monoglyceriden (GMG)
D Erste Zentrifugalabtrennung (2) einer schweren Phase (6) umfassend die alkalisch-wässrigen Lösung (L) mit den hydrolisierten Inhaltsstoffen von einer leichten Phase (7) umfassend den Biodiesel
E Trocknung (5) der leichten Phase (7) bzw. (9) zur Bereitstellung eines aufgearbeiteten Biodiesels zur Verwendung als Kraftstoff mit einem Gehalt an Monoglyceriden von weniger als 0,4 Gew.-%,
sowie eine erfindungsgemäße Verwendung.

## Beschreibung

Die vorliegende Erfindung betrifft ein Verfahren zur Verringerung des Gehalts an Monoglyceriden (MG), auch benannt als Monoacylglyceride (MAG), insbesondere an gesättigten Monoglyceriden (GMG), in einem Roh-Biodiesel (RB).

Im Biodiesel-Herstellungsverfahrensprozess können Glyceride nicht zu 100% als Monoalkylester umgesetzt werden und bleiben daher als Verunreinigungen in der Lösung. In der Literatur (G.M. Chupka, et. al.: Saturated monoglyceride effects on low-temperature performance of biodiesel blends, Journal of the Fuel Processing Technology, Vol. 118, 2014, S. 302-309 / Fersner, et. al: Biodiesel Feedstock and Contaminant Contributions to diesel Fuel Filter Blocking, SAE Int. J. Fuels Lubr., Vol. 7(3), Nov. 2014, S. 783-791) wird beschrieben, dass bei niedrigen Temperaturen MG und GMG Feststoffablagerungen in Dieselmotorenfiltern oder Einspritzdüsen ausgebildet werden. In weiteren Abschlussberichten und Veröffentlichungen (CRC Report Nr. 665, Internal Diesel Injector Deposits, October 2013 / H. Harndorf, et al.: Änderungen von Kraftstoffeigenschaften unter extremen Randbedingungen -Ablagerungen in Common Rail Injektoren II, Universität Rostock, Nr. 1095, Jan. 2015 / Reid, J., Cook, S., and Barker, J.,: Internal Injector Deposits from Sodium Sources, SAE Int. J. Fuels Lubr., Vol.7(2), Apr. 2014, S. 436-444), werden Natriumcarboxylate als eine der Hauptursachen für die Feststoffablagerungen in den Einspritzdüsen von Dieselmotoren genannt.

In der EN 14214: 2014-6 wird für herkömmlichen Biodiesel ein Höchstgehalt an MG von 0,70 Gew.-% definiert. Demgegenüber definiert die ASTM D6751-15ce für die sogenannte 1-B Klasse eines Biodiesels, auch Winter- Biodiesel genannt, einen Höchstgehalt an MG von 0,40 Gew.-%.

Für die sogenannte 2-B-Klasse des Biodiesels wird keine Einschränkung für diesen Parameter gesetzt. Bis zu diesem Zeitpunkt gibt es keine Beschränkung für GMG, allerdings wurde in der Literatur (AGQM, Biodiesel Analytics Important Parameters and their Meaning, In: Technical Bulletin, November, 2012 oder AGQM, Biodiesel Recommendation on Additional Requirements for FAME as Blend Component for Diesel Fuel beyond DIN EN 14214, October, 2010, sowie EN14214:2012 Annex I-V), eine Begrenzung dieser Verbindung im Rahmen eines Standards diskutiert. Sterolglycoside und acylierte Sterolglycoside werden indirekt als eine der Biodiesel-Verunreinigungen gemessen.

Die Grenzwerte betragen in Europa als Gesamtverunreinigung maximal 24 mg / kg und in den USA als CSFT 200s für die 1-B-Klasse bzw. 360s für die 2-B-Klasse.

Öle aus verschiedenen Quellen werden für die Biodiesel Herstellung verwendet. Sogenannte Biokraftstoffe der ersten Generation verwenden als Rohstoff für die Biodieselproduktion pflanzliche Öle wie: Sojaöl, Rapsöl, Palmöl oder Sonnenblumenöl. Biokraftstoffe der zweiten Generation verwenden: Altfette, tierische Fette oder Fettsäuren.

Die WO 2004/083350 A1 beschäftigt sich zudem mit der Verringerung von Schwefelverbindungen in Biodiesel. Dabei wird ein alkalisches Medium eingesetzt mit einer anschließenden Destillation.

Die WO 2012/098114 A1 behandelt die enzymatische Herstellung von Biodiesel mit einer finalen Reinigung durch Waschung mit einem alkalischen Mittel zur Reduzierung der freien Fettsäure.

In den letzten Jahren wurden Druckschriften veröffentlicht, welche sich mit der Verringerung von Biodiesel-Verunreinigungen, die bei niedrigeren Temperaturen Ablagerungen verursachen, befassen. Die WO 2007/076163 A2 offenbart eine MG-reduktion unter Verwendung von Magnesiumsilikat. Die US 9000244 B2 nutzt für eine verbesserte Umwandlung Kavitationsreaktoren. Die US 2016/0264893 A1 beschreibt eine Reduktion von MG durch Hydrierung und Filtration von Biodiesel. Bei der Lehre der US20100236138 A1 wird lonenaustauschharz verwandt, um Verunreinigungen im Biodiesel zu verringern. Schließlich offenbart die WO 2008/051984 A2 eine Membranfiltration zur Reduzierung von Biodiesel-Verunreinigungen, die für die Filterblockierung verantwortlich sind.

Mit einer Sterolglycosid-Reduktion beschäftigt sich u.a. die WO 2010/040428 A1 unter Verwendung einer Wasserwaschsäule; die EP2285940 A1 offenbart ein Verfahren zur Entfernung von Sterylglykosid aus Biodiesel mittels Adsorption durch Smeketit-Silicagel; bei der US20100236138 A1 wird die Verwendung von lonenaustauschharz beschrieben; in der Lehre der WO 2008/051984 A2 wird eine Membranfiltration, um Biodieselverunreinigungen zu reduzieren; die WO 2009/106360 A2, WO 2010/004423 A2, WO 2010/102952 A1 und die WO 2013/138671 A1 beschreiben jeweils Verfahren zur Reduktion von Sterylglycosid durch die Verwendung von Enzymen und Aminosäuren.

Ausgehend von dem vorbeschriebenen Stand der Technik ist es nunmehr Aufgabe der vorliegenden Erfindung ein Verfahren zur Verringerung des Gehalts an Monoglyceriden MG, insbesondere an gesättigen Monoglyceriden GMG, in einem Rohbiodiesel bereitzustellen, welcher bereits den Anforderungen der derzeitexistierenden EU-Normen erfüllt, welcher jedoch noch weiter aufgereinigt werden muss, um auch die Anforderungen des US-Marktes zu erfüllen.

Die vorliegende Erfindung löst diese Aufgabe durch ein Verfahren mit den Merkmalen des Anspruchs 1.

Das erfindungsgemäße Verfahren dient der Verringerung des Gehalts an MG, insbesondere an GMG, in einem Roh-Biodiesel, welcher einen Gehalt an MG zwischen 0,4 bis 0,7 Gew.-% und einen Gehalt an Freien Fettsäuren (FFA) von weniger oder gleich 0,25 Gew.-% aufweist.

Das erfindungsgemäße Verfahren umfasst die folgenden Schritte:
A Bereitstellen des Roh-Biodiesels mit den vorgenannten Inhaltsstoffen in den vorgenannten Konzentrationen der Monoglyceride MG und der Freien Fettsäuren.
B Zugeben einer alkalisch-wässrigen Lösung zum Roh-Biodiesel.
C Durchmischen der alkalisch-wässrigen Lösung unter Hydrolysierung von Glyceriden im Biodiesel, vorzugsweise von Monoglyceriden MG, insbesondere von gesättigten Monoglyceriden GMG.
D Zentrifugales Abtrennen im Rahmen einer ersten Zentrifugalabtrennung einer schweren Phase umfassend die alkalisch-wässrige Lösung mit den hydrolysierten Inhaltsstoffen, insbesondere den hydrolysierten Monoglyceriden MG von einer leichten Phase umfassend den Biodiesel.
E Trocknen der leichten Phase, so dass das finale Produkt in Form eines aufgearbeiteten Biodiesels zur Verwendung als Kraftstoff mit einem Gehalt an MG von weniger als 0,4 Gew.-%. bereitgestellt wird.

Monoglyceride sind einer der Ursachen von Verstopfungen in Filter und Einspritzdüsen bei Diesel-Motoren. Ein Vorteil dieser Erfindung ist es, dass Verunreinigungen verringert werden, die mit Ablagerungen im Zusammenhang stehen, welche ursächlich für die vorgenannten Verstopfungen sind.
Ein weiterer Vorteil dieser Erfindung ist die Erhöhung der Biodieselreinheit.

Vorteilhafte Ausgestaltungen der Erfindung sind Gegenstand der Unteransprüche.

Es ist von Vorteil, wenn nach der Zentrifugaltrennung gemäß Schritt D und vor der Trocknung gemäß Schritt E optional eine Waschung der leichten Phase mit Wasser und/oder mit einer verdünnten Säure erfolgt sowie ebenfalls optional eine zweite Zentrifugal-abtrennung einer schweren Phase umfassend das Wasser oder die verdünnte Säure von einer leichten Phase umfassend den Biodiesel. Dieser Schritt kann erfolgen, allerdings kann die Natriumionen-Konzentration im Biodiesel bereits auch so gering sein, dass eine Waschung nicht zwingend notwendig ist.

Der Roh-Biodiesel als Ausgangsprodukt des Verfahrens erfüllt vorzugsweise die Anforderungen des EU-Standards EN 14214:2014-6.

Der aufgearbeitete Biodiesel erfüllt vorzugsweise den US-Standard ASTM D6751-15ce 1-B-Klasse.

Die wässrig-alkalische Lösung kann vorteilhaft eine Alkali- oder Erdalkalilauge, vorzugsweise eine Natronlauge, sein. Alkali- und Erdalkaliionen können durch Waschen wieder aus dem Biodiesel entfernt werden. Zudem ist der Einsatz von Natronlauge mit relativ geringen Kosten verbunden.

Die NaOH-Konzentration in der Natronlauge beträgt vorteilhaft weniger als 4,03mol/l Gew.-%, vorzugsweise zwischen 0,51 mol/l bis 2,77 mol/l. Die Menge an zudosierter Natronlauge beträgt zudem vorteilhaft zwischen 0,5 bis 3,0 Gew.-% bezogen auf die Menge an Roh-Biodiesel. Der aufgearbeitete Biodiesel zum Einsatz als Kraftstoff sollte auch nur eine geringe Konzentration an Alkali- und Erdalkaliionen, insbesondere auch an Natriumionen, aufweisen. Die Zugabe in den vorgenannten Volumina und/oder Konzentrationen an Natriumionen beträgt die Konzentration an Natriumionen in Biodiesel unter 5 ppm, vorzugsweise sogar unter 1 ppm und ist somit sogar so gering, dass eine Waschung des Biodiesels nicht notwendig ist.

Für eine verbesserte Viskosität und eine höhere Reaktionsgeschwindigkeit bei der Hydrolyse ist es von Vorteil, wenn die Temperatur des Roh-Biodiesels während der Zugabe der wässrig-alkalischen Lösung zumindest 30 °C, vorzugsweise zumindest 50 °C, beträgt.

Die Verweilzeit nach der Zugabe der wässrig-alkalischen Lösung und vor der ersten Zentrifugalabtrennung für eine optimale Einstellung des Reaktionsgleichgewichts kann vorteilhaft zumindest 15 Minuten, vorzugsweise 30 bis 180 Minuten, betragen.

Die erste Zentrifugalabtrennung kann vorteilhaft durch einen Separator bei einer Drehzahl von 4400 bis 7200 U/min erfolgen. Die Drehzahl kann abhängig von der Analgenleistung variieren.

Der pH-Wert der verdünnten Säure bei der Waschung kann vorteilhaft zwischen pH = 3 und pH = 5 liegen. Dadurch kann eine besonders gute Entfernung der Natriumionen aus dem Biodiesel erfolgen.

Die verdünnte Säure kann vorteilhaft eine Phosphor- und/oder Zitronensäure sein.

Der Gehalt an MG kann in dem aufgearbeiteten Biodiesel vorzugsweise sogar unter 0,3 Gew.-% betragen.

Die prozentuale Verringerung an GMG im aufgearbeiteten Biodiesel kann gegenüber dem Roh-Biodiesel zumindest im gleichen Verhältnis oder größer sein als der Gehalt an MG im aufgearbeiteten Biodiesel gegenüber dem Roh-Biodiesel. Dies ist überraschend, da typischerweise ungesättigte Monoglyceride eine bessere Löslichkeit aufweisen.

Ebenfalls erfindungsgemäß ist die Verwendung eines Biodiesels (AB) nach ASTM D6751-15ce 1-B für einen Verbrennungsmotor einer Verbrennungskraftmaschine hergestellt nach dem erfindungsgemäßen Verfahren.

Die vorbeschriebenen vorteilhaften Ausgestaltungen umfassen die Vorteile der Verwendung einer kostengünstigen Chemikalie zur Reduzierung des MG-Gehalts und die Reduzierung der Prozesskosten durch die Reduktion oder vollständigem Entfallen von überschüssigem alkalischen Katalysator (wie z.B. Natriummethylat), um nach der ASTM D6751-15ce 1-B den MG-Wert unter 0,40 Gew.-% zu erreichen.

Im Gegensatz wie beschrieben in der WO2015183744A1, wo als Nebenreaktion bei der Neutralisation von freien Fettsäuren anhand einer Alkohol-Alkalilösung auch MG reduziert werden, ist ein weiterer Vorteil, dass die verwendete Chemikalie zur Reduzierung des MG-Gehalts nicht explosiv ist und somit aufwändige und kostspielige Explosionsschutz- Sicherheitsmaßnahmen nicht erforderlich sind.

Die Limitierung für MG liegt momentan unter der Norm EN14214: 2014-06 bei 0,70 Gew.-%. Die US Limitierung für MG liegt momentan, also zum Zeitpunkt der prioritätsbegründenden Erstanmeldung der vorliegenden Erfindung, unter der Norm ASTM D6751-15ce für 1-B Grade (Winter-Biodiesel) bei 0,40 Gew.-%. Ein 2-B Grade hat in den USA keine Limitierung.

Mit dem erfindungsgemäßen Verfahren wird eine Reduzierung der MG unter 0,40 Gew.-% sogar unter 0,30 Gew.-% erreicht und dies mit einer wesentlich unkomplizierteren Verfahrensführung, als dies im bisherigen Stand der Technik vorgeschlagen wurde. So wurde ein MG-Gehalt von 0,40 Gew.-% bislang hauptsächlich durch erhöhten Katalysatorverbrauch, Kavitationsmischer (US 9000244 B2) oder Biodiesel Destillation, sowie Silica Filtration (WO 2007/076163 A2), Membran Filtration (WO 2008/051984 A2), Ionenaustauscher (US20100236138 A1) oder Katalytische Hydrierung (US 2016/0264893 A1).

Ein kontinuierlicher Verarbeitungsprozess von Roh-Biodiesel, insbesondere in Großanlagen, wie dies im vorliegenden Verfahren möglich ist, kann mit einer Vielzahl der vorgenannten Lösungsvorschläge nicht erreicht werden.

Die Reaktionstemperatur bei der Hydrierung sollte unterhalb des Siedepunktes des Biodiesels liegen, was energetische Vorteile gegenüber einer Biodiesel-Destillation mit sich bringt. Ein weiterer Vorteil gegenüber einer Destillation ist, dass die natürlichen Antioxidanten nicht als Rückstanddestillation ausgetragen werden und somit die Oxidationsstabilität erhöhen kann.

Das Verfahren und der dazugehörige vergleichsweise unkomplizierte apparative Aufbau kann in jeder Biodiesel-Anlage oder sogar bei Biodiesel-Endkunden wie Erdölraffinerien, ohne Eingriff in den Prozess wie dies z.B. beim Einsatz von Kavitationsmischern gemäß dem Stand der Technik der Fall wäre, ergänzt werden.

Nachfolgend sollen die entsprechenden Normen für die EU und US nochmals erläutert werden:
Um Ausflockungen bei niedrigen Temperaturen zu vermeiden, sowie zu verhindern, dass sich nachträglich beim Blending mit Schwefelfreiem Dieselkraftstoff (Ultra-low-suflur-Diesel) Natriumcarboxylate bilden, die eine der Ursachen von Verstopfung bei Diesel-Einspritzdüsen sind, müssen bei der Prozessverarbeitung unerwünschte Substanzen aus Monoalkylester entfernt werden. Einige dieser Verunreinigungen werden als Monoglyceride [MG] genannt, gesättigte Monoaglyceride [GMG], Sterylglykoside [SG] und/oder acylierte Sterylglycoside [ASG] bezeichnet.

Die internationalen Normen [EN14214:2014-06, ASTM D6751-15ce] beschränken Standards für mehrere Biodiesel-Eigenschaften. Die Normen für Europa und die USA wurden ganz oder teilweise von vielen Ländern auf der ganzen Welt übernommen. Die neueste US-Norm ASTM D6751-15ce definiert zwei Sorten von Biodiesel: Klasse 1-B (Winter-Biodiesel) mit strengeren Grenzwerten für MG und cold soak filterability test (CSFT) und Klasse 2-B mit unveränderten Standards. Durch die letzte europäische Norm EN14214: 2014-06 wurden ebenfalls engere Grenzen gesetzt.

Biodiesel-Spezifikationen und Testmethoden nach den obigen Normen für die Parameter Gesamtkontamination, CSFT und Monoglyceride werden in der nachfolgenden Tabelle 1 verglichen:

| Parameter | ASTM D6751-15ce | | | EN14214:2014-06 | |
|---|---|---|---|---|---|
| | 1-B | 2-B | Methode | | Methode |
| Gesamtkontamination, max | - | - | - | 24 mg/kg | EN 12662 |
| CSFT, s, max | 200 | 360 | D7501 | - | - |
| Monoglyceride, max | 0,40 Gew.% | Report | D6584 | 0,70 Gew.-% | EN14105 |

Nachfolgend wird die Erfindung anhand eines konkreten Ausführungsbeispiels und mehrerer Beispiele näher erläutert. Es zeigt:

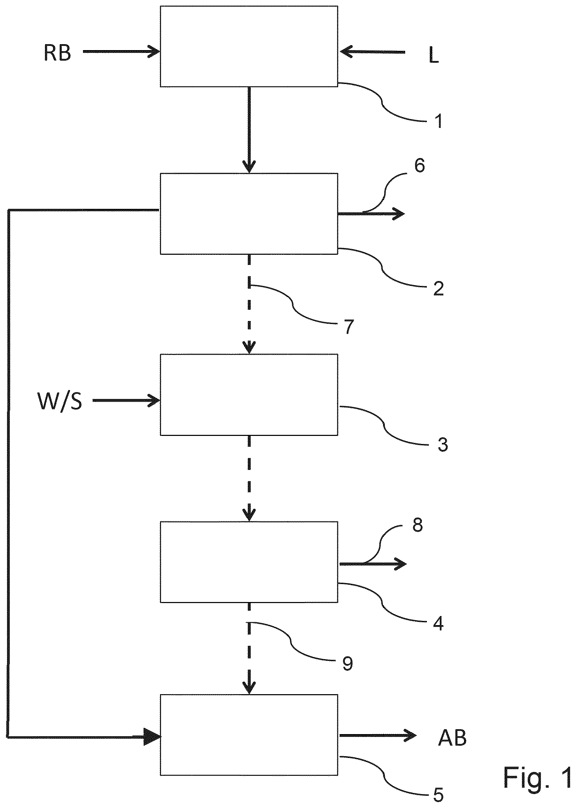

- Fig. 1: Ablaufdiagramm eines Ausführungsbeispiels des erfindungsgemäßen Verfahrens.

Der Ausgangsstoff zur Bearbeitung im vorliegenden Verfahren ist ein Roh-Biodiesel. Dieser Roh-Biodiesel kann bereits einige vorhergehende Verarbeitungsschritte durchlaufen haben und kann bereits die richtlinienkonformen Vorgaben hinsichtlich seiner Zusammensetzung gemäß der Norm EN14214:2014-06 in jedem Parameter erfüllen.

Allerdings unterscheidet sich der Roh-Biodiesel vom aufgearbeiteten Biodiesel nach dessen Behandlung durch das erfindungsgemäße Verfahren durch seinen höheren Anteil an MG.

So kann der Roh-Biodiesel RB einen Anteil an MG von mehr als 0,40 Gew.-%, vorzugsweise zwischen 0,6 bis 0,8 Gew.-% aufweisen bzw. einen Gesamtgehalt an Glycerin von 0,25 Gew.-%.

Durch das vorliegende Verfahren kann eine Reduktion des MG-Gehalts im aufgearbeiteten Biodiesel auf unter 0,40 Gew.-% erfolgen.

Auch der Anteil an gesättigen Monoglyceriden (GMG) in den MG kann, insbesondere proportional zur Verringerung an MG, verbessert werden.

Der aufgearbeitete Biodiesel AB weist eine wesentlich höhere Qualität auf, zeigt weniger eine Tendenz zu Ablagerungen und weist eine bessere Verträglichkeit für den Motor einer Verbrennungskraftmaschine auf.

Nach der US-Norm ASTM D6751-15ce sollte der MG-Gehalt in Biodiesel unter 0,40 Gew.-% betragen. Ein solcher Gehalt ist durch das vorliegende Verfahren bei vergleichsweise unkomplizierter Verfahrensführung realisierbar. Vorzugsweise kann der MG-Gehalt sogar auf unter 0,30 Gew.-% gesenkt werden.

Als Roh-Biodiesel kann ein Biodiesel genutzt werden, welcher die Norm EN14214:2014-06 bereits erfüllt, d.h. einen MG-Gehalt von unter 0,70 Gew.-%, erfüllt, der aber den MG-Gehalt gemäß ASTM D6751-15ce 1- B nicht erfüllt, d.h. einen MG-Gehalt von höher als 0,40 Gew.-% aufweist.

Fig. 1 beschreibt schematisch eine Ausgestaltungsvariante des erfindungsgemäßen Verfahrens, bestehend aus einer Reaktionsstufe 1 mit anschließender Zentrifugalabtrennung 2 von MG, einer Waschstufe 3 mit anschließender Zentrifugalabtrennung 4 der Wasserphase und einer Trocknungsstufe 5.

Die Reaktionsstufe 1 umfasst zunächst ein Zuführen von Roh-Biodiesel RB in einen Mischtank. Sodann erfolgt die Zugabe einer wässrig-alkalischen Lösung L, vorzugsweise einer Natronlauge.

Die Konzentration an Natriumhydroxid in der zudosierten Natronlauge beträgt vorzugsweise weniger als 4,03 mol/l, besonders bevorzugt zwischen 0,51 mol/l bis 2,77 mol/l.

Die Menge an zudosierter Natronlauge bezogen auf die vorgelegte Menge an Roh-Biodiesel beträgt vorzugsweise zwischen 0,5 bis 3,0 Gew.-% pro kg an Roh-Biodiesel, besonders bevorzugt zwischen 1,5 und 2,5 Gew.-% pro kg an Roh-Biodiesel. Die Natronlauge enthält vorzugsweise Wasser als Lösungsmittel.

Die Dosage der wässrig-alkalischen Lösung zum Roh-Biodiesel erfolgt im kontinuierlichen Betrieb.

Die Temperatur im Mischtank beträgt vorzugsweise 20 bis 70°C, besonders bevorzugt zwischen 30 bis 60°C. Zur Vermischung der Lauge und des Roh-Biodiesels kann vorzugsweise ein dynamischer oder ein statischer Mischer genutzt werden.

Während der Reaktion der Lauge mit den verschiedenen im Rohbiodiesel enthaltenen Glyceriden erfolgt ein Übergang der nunmehr hydrolysierten Monoacylglyceride aus dem Roh-Biodiesel in die wässrige Phase bzw. in die wässrig-alkalische Lösung.

Das Gemisch aus Biodiesel und wässrig-alkalischer Lösung L wird sodann in einen ersten Rührbehälter überführt. Die Verweilzeit innerhalb des Rührbehälters beträgt 15 bis 180 Minuten, vorzugsweise 60 bis 90 Minuten. Innerhalb des Rührbehälters ist ein Rührwerk angeordnet, welches mit einer Geschwindigkeit von vorzugsweise 25 bis 120 U/min arbeitet.

Vom ersten Rührbehälter kann das Gemisch aus Biodiesel und wässrig-alkalischer Lösung im Rahmen einer ersten Zentrifugaltrennung 2 in eine schwere Phase 6 und eine leichte Phase 7 getrennt werden. Hierfür kann beispielsweise ein Separator, vorzugsweise mit vertikaler Drehachse, genutzt werden.

Die schwere Phase 6 ist dabei die alkalisch wässrige Lösung enthaltend die verschiedene hydrolysierte MG, insbesondere GMG, sowie Methylester.

Die leichte Phase 7 umfasst im Wesentlichen Biodiesel, welcher einen deutlich verringerten Gehalt an MG, insbesondere GMG und Methylester aufweist. Überraschend hat sich dabei gezeigt, dass die Verringerung des Gehalts an GMG zumindest proportional zur Verringerung des Gesamtgehalts an MG ist.

Die Zentrifugalabtrennung 2 erfolgt vorzugsweise zwischen 4400 bis 7200 U/min, abhängig von der Anlagenleistung. Es können somit kontinuierliche Zulaufmengen von 5 m³/h bis 50m³/h oder mehr pro Zentrifuge behandelt werden. Durch die hohe Zentrifugalkraft (G-Zahl) bis zu 10000xG oder mehr wird eine maximale Trenneffizienz bei kontinuierlichem Betrieb erreicht. Diese Trennseparatoren sind mit Tellerpaket ausgestattet, die eine große äquivalente Klärfläche bis zu zirka 400.000m² anbieten und somit sehr effektiv für die Abtrennung von Suspensionen, die aus zwei oder mehr Phasen mit unterschiedlicher Dichte bestehen. Sie können für eine flüssig-flüssig, flüssig-flüssig-fest bzw. für eine flüssig-feste Abscheidung genutzt werden. Die flüssige Phase wird dabei jeweils kontinuierlich ausgetragen. Für den Feststoffaustrag gibt es unterschiedliche Varianten: diskontinuierlich (zum Beispiel bei Vollmantelzentrifugen, die gestoppt werden müssen, um den angesammelten Feststoff manuell zu entfernen), semi-kontinuierlich (selbstreinigende Zentrifugen, die im Schlammraum angesammelten Feststoff automatisch in periodischen Abständen entleeren).

Trennseparatoren können mit einem sogenannten Finetuner ausgestattet sein, der eine optimale Trennung der Suspensionen ermöglicht.

Es können Trennseparatoren mit hydrohermetischem Einlaufrohr eingesetzt werden. Dieses speziell konzipierte Einlaufrohr schützt das Produkt vor hohen Scherkräften durch sanften Einlauf und verhindert gleichzeitig Sauerstoffaufnahme.

Die Trennseparatoren sind mit verschiedenen Antriebstypen erhältlich: Getriebeantrieb, Riemenantrieb, Direktantrieb und integriertem Direktantrieb. Der integrierte Direktantrieb stellt die neueste Entwicklungsstufe im Prozess der Trennseparatoren-Entwicklung dar, denn er arbeitet ohne Getriebe, Riemen, Kupplung und Motorlager. Die geringe Anzahl installierter Komponenten reduziert nicht nur die Energieverluste, sondern auch die Wartungskosten, und erhöht die Verfügbarkeit der Maschine. Der Platzbedarf des integrierten Direktantriebs ist etwa ein Drittel geringer als bei vergleichbaren Maschinen mit Getriebe- oder Flachriemenantrieb. Trennseparatoren mit integriertem Direktantrieb können außerdem sehr flexibel betrieben werden. Innerhalb eines bestimmten Bereiches ist die Trommeldrehzahl unendlich variabel ohne Änderung des Übersetzungsverhältnisses. Eine Änderung der Trommeldrehzahl bietet eine weitere Möglichkeit bei der Abscheidungseffizienz an. Das innovative Design des integrierten Direktantriebs ermöglicht darüber hinaus im Falle einer Wartung den Tausch des Motors komplett mit Antrieb innerhalb nur weniger Stunden.

Die leichte Phase bzw. der Biodiesel wird sodann mit Wasser W in einer Waschstufe 3 gewaschen. Die Temperatur des Wassers zur Erhöhung der Löslichkeit von hydrolysierten Bestandteilen im Biodiesel ist höher als die Temperatur des Biodiesels, vorzugsweise mehr als 30°C, besonders bevorzugt zwischen 40 und 70°C. Als Wasser wird zur Vermeidung eines zusätzlichen lonen-Eintrags vorzugsweise demineralisiertes Wasser eingesetzt.

Die Menge an zugeführten Wasser in der Waschstufe 3 beträgt zwischen 2,0 bis 10,0 Gew.-%, bezogen auf das Gewicht des Biodiesels, vorzugsweise zwischen 3,0 bis 5,0 Gew.-%.

Nach oder während der Zuführung des Wassers erfolgt eine Durchmischung des Wassers W mit dem Biodiesel. Zur Vermischung des Wassers und des Biodiesels kann vorzugsweise ein dynamischer oder ein statischer Mischer genutzt werden.

Das in der Waschstufe 3 zugeführte Wasser W kann alternativ als verdünnte Säure S ausgebildet sein, wobei hierfür bevorzugt dem vorgenannten heißen demineralisierten Wasser eine Säure zudosiert wird, um so die verdünnte Säure S bereitzustellen. Als zudosierte Säure ist Zitronensäure oder besonders bevorzugt Phosphorsäure bevorzugt. Die Säure kann in konzentrierter oder verdünnter Form zudosiert werden, wobei der pH-Wert der zur Waschung in der Waschstufe 3 verwendeten verdünnten Säure S vorzugsweise zwischen pH = 3 und 5, insbesondere zwischen pH = 3,5 und 4 liegt. Durch die Zugabe von Säure können Natriumsalze ausgefällt werden. Sie können dann bei der nachfolgenden zentrifugalen Trennung zusammen mit der schweren Phase 8 abgeschieden werden.

Das Gemisch aus Wasser W, verdünnter Säure S und Biodiesel wird in einer zweiten Zentrifugalabtrennung 4 in eine leichte und eine schwere Phase 9, 8 getrennt. Die Zentrifugalabtrennung kann vorzugsweise in einem Separator, insbesondere in einem Separator mit vertikaler Drehachse, erfolgen.

Die Zentrifugalabtrennung 4 erfolgt mit ähnlichen oder gleichen Zentrifugen wie in der Zentrifugalabtrennung 2.

Die schwere Phase 8 umfasst die Wasser- bzw. Säurephase inklusive der gebildeten Salze. Bei Normalbetrieb wird kein Metylester in der Schwerenphase erwartet.

Die leichte Phase 9 umfasst im Wesentlichen Biodiesel. Dieser weist einen Gehalt an MG von weniger als 0,40 Gew.-%, vorzugsweise von weniger als 0,30 Gew.-% und einen deutlich verringerten Anteil an GMG auf.

Der aus der Zentrifugalabtrennung kommende Biodiesel 9 muss sodann von restlichen Wasseranteilen in einer Trocknungsstufe 5 in einen Trockner überführt werden. Der Trockner wird unter Unterdruck, insbesondere unter Vakuum, betrieben um somit die Trocknungstemperatur zu senken und gleichzeitig Dampfverbrauch einzusparen. Es wird dabei das finale Produkt, ein aufgearbeiteter Biodiesel AB, bereitgestellt.

Nachfolgend werden zur besseren Erläuterung der vorliegenden Erfindung einige bevorzugte konkrete Versuchsbeispiele vorgestellt:

### Beispiel 1 (Vergleichsbeispiel)

Roh-Biodiesel aus Sojabohnenöl wurde gemäß DIN EN 14105:2011 bezüglich seines Glyeridgehalts analysiert. Die Daten sind wie folgt (Tabelle 2):

| Monoglyceride (Gew..-%) | Diglyceride (Gew.-%) | Triglyceride (Gew.-%) | Freies Glycerin (Gew.-%) | Gesamt Glycerin (Gew.-%) |
|---|---|---|---|---|
| 0,38 | 0,06 | <0,01 | <0,001 | 0,106 |

1000g des vorgenannten Roh-Biodiesels wurden auf 50°C erhitzt. 3,0 Gew.-% demineralisiertes Wasser wurde intensiv über mehrere Sekunden mit dem Biodiesel gemischt. Das Gemisch wurde unter konstanter Rührgeschwindigkeit von 100 U/min über 60 Minuten bei konstanter Temperatur gemischt. Die Mischung wurde zentrifugiert und in eine leichte und eine schwere Phase durch Zentrifugalabtrennung getrennt. Die abgetrennte leichte Phase wurde gemäß DIN EN 14105:2011 bezüglich ihres Glyceridgehalts analysiert. Die Ergebnisse sind wie folgt (Tabelle 3):

| Monoglyceride (Gew..-%) | Diglyceride (Gew.-%) | Triglyceride (Gew.-%) | Freies Glycerin (Gew.-%) | Gesamt Glycerin (Gew.-%) |
|---|---|---|---|---|
| 0,38 | 0,06 | <0,01 | <0,001 | 0,106 |

Wie man anhand von Tabelle 3 erkennt, tritt keine Verringerung an MG auf.

Zusätzlich wurden GMG sowohl auf der unbehandelten Probe als auch auf der behandelten Probe analysiert. Die Ergebnisse sind in der nachfolgenden Tabelle 4 unten aufgeführt:

| Unbehandelte Probe | Behandelte Probe |
|---|---|
| Gesättigte Monoglyceride (Gew.-%) | Gesättigte Monoglyceride (Gew.-%) |
| 0,05 | 0,05 |

Wie aus Tabelle 4 ersichtlich ist, tritt keine Verringerung an GMG auf.

### Beispiel 2:

Das Beispiel 2 wurde wiederholt jedoch dieses Mal unter Zugabe einer alkalisch-wässrigen Lösung anstelle von Wasser. Die Bedingungen waren wie folgt:
1000g des vorgenannten Roh-Biodiesels wurden auf 50°C erhitzt. 3,0 Gew.-% verdünnte Natronlauge (0,51mol/l NaOH) wurde intensiv über mehrere Sekunden mit dem Biodiesel gemischt. Das Gemisch wurde unter konstanter Rührgeschwindigkeit von 100 U/min über 60 Minuten bei konstanter Temperatur gemischt. Die Mischung wurde zentrifugiert und in eine leichte und eine schwere Phase durch Zentrifugalabtrennung getrennt. Die abgetrennte leichte Phase wurde gemäß DIN EN 14105:2011 bezüglich ihres Glyceridgehalts analysiert.

Die Ergebnisse waren wie folgt (Tabelle 5):

| Monoglyceride (Gew.-%) | Diglyceride (Gew.-%) | Triglyceride (Gew.-%) | Freies Glycerin (Gew.-%) | Gesamt Glycerin (Gew.-%) |
|---|---|---|---|---|
| 0,05 | 0,1 | <0,01 | <0,001 | 0,027 |

Wie aus Tabelle 5 ersichtlich ist, wurde der MG deutlich unter 0,30 Gew.-% reduziert, was einer Reduktion von 86% entspricht. Auch das Gesamtglycerin wurde durch die MG-Reduktion reduziert.

Zusätzlich wurden GMG sowohl auf der unbehandelten Probe als auch auf der behandelten Probe analysiert. Die Ergebnisse sind in der nachfolgenden Tabelle 6 unten aufgeführt:

| Unbehandelte Probe | Behandelte Probe |
|---|---|
| Gesättigte Monoglyceride (Gew.-%) | Gesättigte Monoglyceride (Gew.-%) |
| 0,05 | <0,01 |

Wie aus Tabelle 6 ersichtlich ist, wurde GMG proportional mit der Reduktion des MG reduziert, was einer Reduktion von mehr als 80% entspricht.

Zusätzlich wurde Natrium (Na) anhand der Prüfmethode DIN EN 14538 sowohl auf der unbehandelten Probe als auch auf der behandelten Probe analysiert. Die Ergebnisse sind in der nachfolgenden Tabelle 7 unten aufgeführt.

| Unbehandelte Probe | Behandelte Probe |
|---|---|
| Natrium (mg/kg) | Natrium (mg/kg) |
| <0,5 | <0,5 |

Wie aus Tabelle 7 ersichtlich ist, bleibt Natrium nach der Behandlung unter dem vorgeschriebenen Grenzwert von der US Norm ASTM D6751-15ce für 1-B und 2-B Klasse unter 5mg/kg (Na+K) und für die Europäische Norm EN14214:2014-06 unter 5mg/kg (Na+K).

### Beispiel 3

Roh-Biodiesel aus Rapsöl wurde nach DIN EN 14105: 2011 hinsichtlich des Glyceridgehalts analysiert. Die analysierten Daten des Roh-Biodiesels sind in der nachstehenden Tabelle 8 aufgeführt.

| Monoglyceride (Gew..-%) | Diglyceride (Gew.-%) | Triglyceride (Gew.-%) | Freies Glycerin (Gew.-%) | Gesamt Glycerin (Gew.-%) |
|---|---|---|---|---|
| 0,50 | 0,08 | <0,01 | 0,002 | 0,143 |

1000g des vorgenannten Roh-Biodiesels wurden auf 60°C erhitzt. 6,0 -Gew.-% verdünnte Natronlauge (0,51mol/l NaOH) wurde intensiv über mehrere Sekunden mit dem Biodiesel gemischt. Das Gemisch wurde unter konstanter Rührgeschwindigkeit von 100 U/min über 60 Minuten bei konstanter Temperatur gemischt. Die Mischung wurde zentrifugiert und in eine leichte und eine schwere Phase durch Zentrifugalabtrennung getrennt. Die leichte Phase, also der Biodiesel, wurde sodann mit heißem demineralisiertem Wasser gewaschen bei einer Temperatur von 60°C. Die Menge an Wasser bezogen auf die Menge an Biodiesel betrug 10 Gew.-%. Das Wasser wurde durch Zugabe von Phosphorsäure zuvor auf einen pH-Wert von PH 3 eingestellt. Anschließend erfolgte eine Zentrifugalabtrennung und die abgetrennte leichte Phase wurde gemäß DIN EN 14105:2011 bezüglich ihres Glyceridgehalts analysiert. Nachfolgend sind die Ergebnisse (Tabelle 9) aufgeführt:

| Monoglyceride (Gew.-%) | Diglyceride (Gew.-%) | Triglyceride (Gew.-%) | Freies Glycerin (Gew.-%) | Gesamt Glycerin (Gew.-%) |
|---|---|---|---|---|
| 0,28 | 0,10 | 0,01 | 0,005 | 0,088 |

Wie aus Tabelle 9 ersichtlich ist, wurde der MG-gehalt auf unter 0,30 Gew.-% reduziert, was einer Verringerung von 44% entspricht. Auch das Gesamtglycerin wurde durch die MG-Reduktion reduziert. Es wurde eine leichte Zunahme des Diglyceride festgestellt.

### Beispiel 4

Roh-Biodiesel aus Sojabohnenöl-Biodiesel wurde nach DIN EN 14105: 2011 hinsichtlich des Glyceridgehalts analysiert. Die analysierten Daten sind in der nachstehenden Tabelle 10 aufgeführt.

| Monoglyceride (Gew.-%) | Diglyceride (Gew.-%) | Triglyceride (Gew.-%) | Freies Glycerin (Gew.-%) | Gesamt Glycerin (Gew.-%) |
|---|---|---|---|---|
| 0,60 | 0,16 | 0,07 | 0,006 | 0,19 |

1000g des vorgenannten Roh-Biodiesels wurden auf 60°C erhitzt. 3,0 Gew.-% verdünnte Natronlauge (1,05 mol/l NaOH) wurde intensiv über mehrere Sekunden mit dem Biodiesel gemischt. Das Gemisch wurde unter konstanter Rührgeschwindigkeit von 100 U/min über 60 Minuten bei konstanter Temperatur gemischt. Die Mischung wurde zentrifugiert und in eine leichte und eine schwere Phase durch Zentrifugalabtrennung getrennt. Die leichte Phase, also der Biodiesel, wurde sodann mit heißem demineralisierten Wasser gewaschen bei einer Temperatur von 60°C. Die Menge an Wasser bezogen auf die Menge an Biodiesel betrug 10 Gew.-%. Das Wasser wurde durch Zugabe von Phosphorsäure zuvor auf einen pH-Wert von PH 3 eingestellt. Anschließend erfolgte eine Zentrifugalabtrennung und die abgetrennte leichte Phase wurde gemäß DIN EN 14105:2011 bezüglich ihres Glyceridgehalts analysiert. Nachfolgend sind die Ergebnisse (Tabelle 11) aufgeführt:

| Monoglyceride (Gew.-%) | Diglyceride (Gew.-%) | Triglyceride (Gew.-%) | Freies Glycerin (Gew.-%) | Gesamt Glycerin (Gew.-%) |
|---|---|---|---|---|
| 0,27 | 0,19 | 0,07 | <0,001 | 0,104 |

Wie aus Tabelle 11 ersichtlich ist, wurde der MG auf unter 0,30 Gew.-% reduziert, was einer Reduktion von 55% entspricht. Auch das Gesamtglycerin wurde durch die MG-Reduktion reduziert.

Zusätzlich wurden GMG sowohl auf der unbehandelten Probe als auch auf der behandelten Probe analysiert. Die Ergebnisse sind in der nachfolgenden Tabelle 12 unten aufgeführt:

| Unbehandelte Probe | Behandelte Probe |
|---|---|
| Gesättigte Monoglyceride (Gew.-%) | Gesättigte Monoglyceride (Gew.-%) |
| 0,09 | 0,04 |

Wie aus Tabelle 12 ersichtlich ist, wurde GMG proportional mit der Reduktion des MG reduziert, was einer Reduktion von 55% entspricht.

Zusätzlich wurde Natrium (Na) anhand der Prüfmethode DIN EN 14538 sowohl auf der unbehandelten Probe als auch auf der behandelten Probe analysiert. Die Ergebnisse sind in der nachfolgenden Tabelle 13 unten aufgeführt.

| Unbehandelte Probe | Behandelte Probe |
|---|---|
| Natrium (mg/kg) | Natrium (mg/kg) |
| <1 | <1 |

Wie aus Tabelle 12 ersichtlich ist, bleibt Natrium nach der Behandlung unter den vorgeschriebenen Grenzwert von der US Norm ASTM D6751-15ce für 1-B und 2-B Klasse unter 5mg/kg (Na+K) und für die Europäische Norm EN14214:2014-06 unter 5mg/kg (Na+K).

### Beispiel 5

Ein Roh-Biodiesel aus Palmöl wurde hinsichtlich des Glyceridgehaltes analysiert (DIN EN 14105: 2011). Die analysierten Daten nachfolgend (Tabelle 14) aufgeführt:

| Monoglyceride (Gew.-%) | Diglyceride (Gew.-%) | Triglyceride (Gew.-%) | Freies Glycerin (Gew.-%) | Gesamt Glycerin (Gew.-%) |
|---|---|---|---|---|
| 0,57 | 0,22 | 0,29 | 0,003 | 0,208 |

1000 g des vorgenannten Roh-Biodiesels wurden auf 60°C erhitzt. 3,0 Gew.-% verdünnte Natronlauge (1,05 mol/l NaOH) wurde intensiv über mehrere Sekunden mit dem Biodiesel gemischt. Das Gemisch wurde unter konstanter Rührgeschwindigkeit von 100 U/min über 60 Minuten bei konstanter Temperatur gemischt. Die Mischung wurde zentrifugiert und in eine leichte und eine schwere Phase durch Zentrifugalabtrennung getrennt. Die leichte Phase, also der Biodiesel, wurde sodann mit heißem demineralisierten Wasser gewaschen bei einer Temperatur von 60°C. Die Menge an Wasser bezogen auf die Menge an Biodiesel betrug 5 Gew.-%. Das Wasser wurde durch Zugabe von Zitronensäure zuvor auf einen pH-Wert von pH 3 eingestellt. Anschließend erfolgte eine Zentrifugalabtrennung und die abgetrennte leichte Phase wurde gemäß DIN EN 14105:2011 bezüglich ihres Glyceridgehalts analysiert. Nachfolgend sind die Ergebnisse (Tabelle 15) dargestellt:

| Monoglyceride (Gew.-%) | Diglyceride (Gew_{.}-%) | Triglyceride (Gew.-%) | Freies Glycerin (Gew.-%) | Gesamt Glycerin (Gew.-%) |
|---|---|---|---|---|
| 0,30 | 0,25 | 0,30 | <0,01 | 0,143 |

Wie aus Tabelle 15 ersichtlich ist, wurde der MG-Gehalt auf 0,30 Gew.-% reduziert, was einer Reduktion von 48% entspricht. Auch das Gesamtglycerin wurde durch die MG-Reduktion reduziert. Es wurde eine leichte Zunahme des Diglycerids festgestellt

Die vorgenannte Erfindung ist nicht nur auf die oben beschriebenen Beispiele beschränkt. Sie kann soweit modifiziert werden, dass die unten aufgeführten Ansprüche erfüllt werden.

Die vorstehenden Ergebnisse zeigen, dass für Biodiesel der ersten Generation, der aus Ausgangsmaterialien wie z. B.: Sojabohnenöl, Palmöl oder Rapsöl gewonnen wird, durch eine unkomplizierte Verfahrenserweiterung welche ergänzend in jeder Biodieselproduktionsanlage mit geringem zusätzlichen Geräteaufwand anwendbar ist, zu einer erhöhten Qualität des Endprodukts führt.

Für Biodiesel der zweiten Generation, der aus Ausgangsmaterialien wie z. B. gebrauchtem Speiseöl (UCO), tierischen Fetten und/oder Fettsäuren gewonnen wird, kann dieses Verfahren zu einer besseren Leistung der nachfolgenden Biodiesel-Destillationsstufe führen, indem die Menge an schwerem destilliertem Rückstand verringert wird.

Somit ist das Verfahren vorteilhaft jedoch nicht ausschließlich auf Biodiesel der ersten Generation anwendbar, sondern auch auf Biodiesel der zweiten Generation.

Die US 2010 0175312A1 und die WO2015183744A1 offenbaren eine klassische Neutralisation Freier Fettsäure während der Biodiesel-Herstellung. Im vorliegenden Fall handelt es sich bereits bei dem Ausgangsprodukt, dem Roh-Biodiesel, um einen Biodiesel mit einem Anteil an freien Fettsäuren von weniger als 0,25 Gew.-%, was eine Säurezahl von 0,5mg KOH/g entspricht. In der Europäischen Norm EN14214:2014-06und in der US Norm ASTM D6751-15ce wird eine maximale Säurezahl von 0,5mg KOH/g zugelassen. Im Weiteren kann im vorliegenden erfindungsgemäßen Verfahren vorteilhaft kein Alkohol benutzt werden und somit entfallen komplexe und kostspielige Sicherheitsmaßnahmen bzw. Explosionsschutzmaßnahmen.

### Bezugszeichen

- 1: Zugabe wässrig-alkalische Lösung
- 2: erste Zentrifugalabtrennung
- 3: Waschung
- 4: zweite Zentrifugalabtrennung
- 5: Trocknung
- 6: schwere Phase
- 7: leichte Phase
- 8: schwere Phase
- 9: leichte Phase

- RB: Roh-Biodiesel
- AB: aufgearbeiteter Biodiesel
- L: wässrig alkalische Lösung
- W: Wasser
- S: Säure

## Patentansprüche

1. Verfahren zur Verringerung des Gehalts an Monoglyceriden (MG), insbesondere an gesättigten Monoglyceriden (GMG), in einem Roh-Biodiesel (RB), welcher einen Gehalt an Monoglyceriden (MG) zwischen 0,4 bis 0,7 Gew.-% und einen Gehalt an Freien Fettsäuren (FFA) von weniger oder gleich 0,25 Gew.-% aufweist, **gekennzeichnet durch die folgenden Schritte:**
A Bereitstellen des Roh-Biodiesels (RB) mit den vorgenannten Inhaltsstoffen in den vorgenannten Konzentrationen;
B Zugabe (1) einer alkalisch-wässrigen Lösung (L) zum Roh-Biodiesel (RB)
C Durchmischen der alkalisch-wässrigen Lösung (L) unter Hydrolysierung von Glyceriden im Biodiesel, vorzugsweise von Monoglyceriden (MG), insbesondere von gesättigten Monoglyceriden (GMG)
D Erste Zentrifugalabtrennung (2) einer schweren Phase (6) umfassend die alkalisch-wässrigen Lösung (L) mit den hydrolisierten Inhaltsstoffen von einer leichten Phase (7) umfassend den Biodiesel
E Trocknung (5) der leichten Phase (7) und/oder (9) zur Bereitstellung eines aufgearbeiteten Biodiesels (AB) zur Verwendung als Kraftstoff mit einem Gehalt an Monoglyceriden von weniger als 0,4 Gew.-%.

2. Verfahren nach Anspruch 1, **dadurch gekennzeichnet, dass** nach der Zentrifugaltrennung (2) gemäß Schritt D) und vor der Trocknung (5) gemäß Schritt E eine Waschung (3) der leichten Phase (7) mit Wasser (W) und/oder mit einer verdünnten Säure (S) erfolgt sowie eine zweite Zentrifugalabtrennung (4) einer schweren Phase (8) umfassend das Wasser (W) oder die verdünnte Säure (S), sowie ggf. ausgefällte Salze der Kationen der zugefügten alkalisch-wässrigen Lösung (L), von einer leichten Phase (9) umfassend den Biodiesel.

3. Verfahren nach Anspruch 1 oder 2, **dadurch gekennzeichnet, dass** der Roh-Biodiesel (RB) die Anforderungen des EU-Standards EN 14214:2014-06 erfüllt.

4. Verfahren nach einem der vorhergehenden Ansprüche, **dadurch gekennzeichnet, dass** der aufgearbeitete Biodiesel (AB) dem US-Standard ASTM D6751-15ce 1-B-Klasse erfüllt im Bezug zu Monoglyceriden (MG).

5. Verfahren nach einem der vorhergehenden Ansprüche, **dadurch gekennzeichnet, dass** die wässrig-alkalische Lösung (L) eine Alkali- oder Erdalkalilauge, vorzugsweise eine Natronlauge, ist.

6. Verfahren nach einem der vorhergehenden Ansprüche, **dadurch gekennzeichnet, dass** die NaOH-Konzentration in der Natronlauge weniger als 4,03 mol/l beträgt, vorzugsweise zwischen 0,51 mol/l bis 2,77 mol/l beträgt.

7. Verfahren nach Anspruch 6, **dadurch gekennzeichnet, dass** die Menge an zudosierter Natronlauge zwischen 1,0 bis 3,0 Gew.-% bezogen auf die Menge an Roh-Biodiesel (RB) beträgt.

8. Verfahren nach einem der vorhergehenden Ansprüche, **dadurch gekennzeichnet dass** die Temperatur des Roh-Biodiesels (RB) während der Zugabe der wässrig-alkalischen Lösung (L) zumindest 30°C, vorzugsweise zumindest 50 °C, beträgt.

9. Verfahren nach einem der vorhergehenden Ansprüche, **dadurch gekennzeichnet, dass** die Verweilzeit nach der Zugabe der wässrig-alkalischen Lösung (L) und vor der ersten Zentrifugalabtrennung (2) zumindest 15 Minuten, vorzugsweise 30 bis 180 Minuten, beträgt.

10. Verfahren nach einem der vorhergehenden Ansprüche, **dadurch gekennzeichnet, dass** die erste Zentrifugalabtrennung (2) durch einen Separator bei einer Drehzahl von 4400 bis 7200 U/min erfolgt.

11. Verfahren nach einem der vorhergehenden Ansprüche, **dadurch gekennzeichnet, dass** der pH-Wert der verdünnten Säure bei der Waschung (3) zwischen pH = 3 und pH = 5 liegt.

12. Verfahren nach einem der vorhergehenden Ansprüche, **dadurch gekennzeichnet, dass** die verdünnte Säure eine Phosphor- und/oder Zitronensäure ist.

13. Verfahren nach einem der vorhergehenden Ansprüche, **dadurch gekennzeichnet, dass** die der Gehalt an Monoglyceriden (MG) in dem aufgearbeiteten Biodiesel (AB) unter 0,3 Gew.-% beträgt.

14. Verfahren nach einem der vorhergehenden Ansprüche, **dadurch gekennzeichnet, dass** die prozentuale Verringerung an gesättigten Monoglyceriden (GMG) im aufgearbeiteten Biodiesel (AB) gegenüber dem Roh-Biodiesel (RB) zumindest im gleichen Verhältnis oder größer ist wie der Gehalt an Monoglyceriden (MG) im aufgearbeiteten Biodiesel (AB) gegenüber dem Roh-Biodiesel (RB).

15. Verwendung eines Biodiesels (AB) nach ASTM D6751-15ce 1-B für einen Verbrennungsmotor eines Verbrennungskraftmaschine hergestellt nach einem Verfahren nach einem der vorhergehenden Ansprüche.
